# FASCICULE DE BREVET EUROPEEN

(11) **EP 4 520 051 B1**
(45) Date de publication et mention de la délivrance du brevet: **25.02.2026**
(21) Numéro de dépôt: 23725274.7
(22) Date de dépôt: 06.04.2023
(51) Int. Cl.: H04Q 9/00, G08C 17/02, E04F 10/06, E06B 9/68, H02J 50/20, E06B 9/72

(54) **DISPOSITIF POUR UNE STRUCTURE DÉPLOYABLE COMPRENANT UN DISPOSITIF ÉMETTEUR/RÉCEPTEUR PERMETTANT DE RECHARGER UN DISPOSITIF DE STOCKAGE D'ÉNERGIE**
VORRICHTUNG FÜR EINE AUSFAHRBARE STRUKTUR MIT EINER SENDE-EMPFANGSVORRICHTUNG ZUM LADEN EINER ENERGIESPEICHERVORRICHTUNG
DEVICE FOR A DEPLOYABLE STRUCTURE COMPRISING A TRANSCEIVER DEVICE FOR CHARGING AN ENERGY STORAGE DEVICE

(30) Priorité: 03.05.2022 FR 2204175
(43) Date de publication de la demande: 12.03.2025
(73) Titulaire: SOMFY ACTIVITES SA, 74300 Cluses (FR)
(72) Inventeur: LUONG, Denis, 74300 CLUSES (FR)
(74) Mandataire: Germain Maureau
(86) Numéro de dépôt international: PCT/FR2023/050496
(87) Numéro de publication internationale: WO 2023/214140

(56) Documents cités:
- WO-A1-2021/136916

## Description

La présente invention se rapporte au domaine des structures déployables motorisées dans une installation domotique, tel qu'un store motorisé par exemple ou une protection solaire plus généralement. Plus particulièrement, la présente invention se rapporte à un dispositif comprenant un dispositif émetteur/récepteur sans fil de manière à transmettre un signal d'information, à un ensemble comprenant le dispositif, et à un procédé de commande.

De manière connue, le document WO2021/136916 décrit un capteur disposé sur un store motorisé. Ledit capteur comprend :
- un émetteur/récepteur sans fil configuré pour recevoir un signal incident en provenance d'une unité électronique de contrôle lorsque le store motorisé est dans une position repliée ;
- une source d'énergie autonome ;
- un convertisseur configuré pour convertir le signal incident en courant électrique et pour alimenter la source d'énergie autonome à l'aide dudit courant électrique;
- une unité logique de traitement adaptée pour décider de l'émission d'un signal d'information à l'unité électronique de contrôle par l'émetteur/récepteur sans fil lorsque le store motorisé est dans une position déployée, la source d'énergie autonome étant configurée pour alimenter l'unité logique de traitement ;
- des diodes et des résistances variables permettant de diriger le signal incident vers le convertisseur ou d'isoler électriquement l'émetteur/récepteur sans fil du convertisseur lors de l'émission du signal d'information.

La présente invention a pour but d'améliorer la solution ci-dessus, et notamment de proposer une solution permettant de gagner en place et de minimiser la consommation d'énergie du capteur.

A cet effet, la présente invention concerne un dispositif destiné à être positionné sur une partie mobile d'une structure déployable, et à émettre un signal d'information à destination d'au moins une unité électronique de contrôle solidaire d'une partie fixe de la structure déployable, tel que le dispositif comprend :
- au moins un dispositif émetteur/récepteur sans fil configuré pour recevoir un signal incident en provenance de l'au moins une unité électronique de contrôle et pour émettre le signal d'information à destination de l'au moins une unité électronique de contrôle, le dispositif émetteur/récepteur sans fil comprenant :
   - une antenne ;
   - au moins une unité logique de traitement ;
- au moins un dispositif de stockage d'énergie ;
- au moins un convertisseur configuré pour convertir le signal incident en courant électrique et pour recharger le dispositif de stockage d'énergie à l'aide dudit courant électrique ;

l'au moins une unité logique de traitement étant adaptée pour décider de l'émission du signal d'information à l'au moins une unité électronique de contrôle par l'antenne, l'au moins un dispositif de stockage d'énergie étant configuré pour alimenter l'au moins une unité logique de traitement ;
caractérisé en ce que l'antenne est en permanence électriquement connectée à l'au moins un convertisseur.

Le dispositif selon l'invention comprend un dispositif émetteur/récepteur qui permet de recevoir un signal incident et, alternativement, d'émettre un signal d'information via l'antenne. Le dispositif émetteur/récepteur comprend l'antenne et l'unité logique de traitement, ainsi qu'un condensateur et une résistance connectée à la masse électrique qui sont positionnés sur une liaison entre l'antenne et l'unité logique de traitement.

Le dispositif comprend également un convertisseur qui permet de convertir le signal incident en courant électrique et ainsi de recharger le dispositif de stockage d'énergie.

Le dispositif est configuré de sorte que l'antenne est en permanence électriquement reliée ou connectée au convertisseur. Le dispositif selon l'invention ne comprend donc aucun dispositif électrique, comme par exemple un interrupteur, ou une diode, permettant de couper une liaison entre le dispositif émetteur/récepteur et le convertisseur.

Ainsi, le signal incident est donc toujours dirigé au moins vers le convertisseur. Tout signal transitant par l'antenne est également reçu par le convertisseur. Ainsi, lors de l'émission du signal d'information utilisant l'antenne, une partie de ce dernier est également dirigée vers le convertisseur du fait de la liaison permanente entre l'antenne et le convertisseur. Le dispositif ne comprend aucun mode de fonctionnement dans lequel le convertisseur est déconnecté de l'antenne.

Le dispositif selon l'invention est donc configuré pour constituer une réserve d'énergie notamment au moyen du signal incident, afin de pouvoir réutiliser cette réserve par exemple lors de l'émission du signal d'information.

Le dispositif selon l'invention présente donc un volume et un prix plus faible que celui de l'état de l'art en ce que certains composants, c'est-à-dire des diodes et des résistances variables, sont retirés.

En outre, le dispositif présente une consommation d'énergie plus faible que celui-de l'état de l'art puisqu'il présente moins de composants à alimenter électriquement et/ou moins de traitement de signal consommateur d'énergie.

L'invention peut présenter une ou plusieurs des caractéristiques suivantes prises seules ou en combinaison.

Selon un mode de réalisation le signal incident et le signal d'information sont transmis selon un protocole radio propriétaire adapté ou selon un protocole radio standard, par exemple le protocole Bluetooth, et plus spécifiquement, le « Bluetooth Advertising ».

Selon un mode de réalisation, le convertisseur est configuré pour générer un signal binaire à destination de l'unité logique de traitement.

Selon un mode de réalisation, une valeur du signal binaire générée dépend d'un état de réception du signal incident.

Selon un mode de réalisation, le signal d'information est de toute sorte, tel qu'un signal de sécurité comprenant une alerte par exemple, basée sur une information détectée par le dispositif. Selon un mode de réalisation, le convertisseur est configuré pour convertir un signal radiofréquence en courant.

Selon un mode de réalisation, le dispositif de stockage d'énergie est une batterie, un condensateur ou un supercondensateur.

Selon un mode de réalisation, l'unité logique de traitement est en permanence électriquement connectée à l'antenne.

Le dispositif ne comprend donc aucun dispositif électrique, par exemple un interrupteur, ou une diode, permettant de couper une liaison entre l'antenne et l'unité logique de traitement.

Ainsi, le signal incident est donc toujours dirigé vers l'unité logique de traitement, et lors de l'émission du signal d'information, une partie de ce dernier est également dirigée vers le convertisseur. Tout signal transitant par l'antenne est également reçu par l'unité logique de traitement.

Le dispositif selon l'invention présente donc un volume et un prix plus faible que celui de l'état de l'art en ce que certains composants, c'est-à-dire des diodes et des résistances variables, sont retirés.

En outre, le dispositif présente une consommation d'énergie plus faible que celui-de l'état de l'art puisqu'il présente moins de composants à alimenter électriquement.

Selon un mode de réalisation, l'unité logique de traitement comprend une cellule d'adaptation d'impédance.

Par exemple, la cellule d'adaptation d'impédance comprend un condensateur. Celui-ci comprend une charge résiduelle non nulle de sorte qu'il ne permet pas de déconnexion entre l'antenne et l'unité logique de traitement.

Selon un mode de réalisation, l'unité logique de traitement comprend un mode de fonctionnement en veille dans lequel le signal incident n'est pas décrypté par l'unité logique de traitement.

Le mode de fonctionnement en veille correspond à une mise en veille de l'unité logique de traitement dans lequel le signal incident est reçu mais n'est pas électriquement traité. Ainsi, lorsque l'unité logique de traitement est dans le mode de fonctionnement en veille, sa consommation électrique est faible, voire nulle.

Par exemple, lorsque le dispositif selon l'invention est à distance d'un actionneur positionné sur une partie fixe de la structure mobile, le dispositif peut envoyer, via le signal d'information, un message demandant à l'actionneur de stopper l'envoi de messages incidents puis se mettre dans le mode de fonctionnement en veille.

Lorsque le dispositif selon l'invention est proche de l'actionneur, autrement dit lorsque la structure mobile est en position fermée ou repliée, le dispositif selon l'invention informe l'actionneur d'arrêter ou de réduire l'envoi de messages incidents.

Selon un mode de réalisation, l'unité logique de traitement comprend un mode de fonctionnement de réception dans lequel le signal incident est décrypté par l'unité logique de traitement.

Dans le mode de fonctionnement de réception, l'unité logique de traitement reçoit des informations par le signal incident de l'unité électronique de contrôle. Les informations peuvent, par exemple, être un ordre de mouvement de la partie mobile par rapport à la partie fixe de la structure déployable.

Selon un mode de réalisation, l'unité logique de traitement comprend un mode de fonctionnement d'émission dans lequel l'unité logique de traitement émet le signal d'information à l'unité électronique de contrôle.

Selon un mode de réalisation alternatif, l'unité logique de traitement est électriquement connectée à l'antenne au moyen d'un organe de commande permettant d'ouvrir ou de fermer la connexion électrique.

Ainsi lorsque l'organe de commande est ouvert le signal incident est dirigé uniquement vers le convertisseur. De la sorte, l'unité logique de traitement ne présente pas de mode de fonctionnement en veille. L'unité logique de traitement peut donc fonctionner selon le mode de fonctionnement de réception ou d'émission lorsque l'organe de commande est en position fermée.

Selon un mode de réalisation, l'organe de commande est un interrupteur normalement en position fermée.

Ouvrir la liaison entre l'antenne et l'unité logique de traitement permet de maximiser l'efficacité de charge en optimisant l'adaptation d'impédance sur le brin d'antenne vers le convertisseur. Selon un mode de réalisation, le signal d'information est au moins en partie converti en courant électrique par le convertisseur.

En effet, comme le convertisseur est en permanence électriquement relié à l'antenne, tout signal transitant par cette dernière est également reçu par le convertisseur.

Selon un mode de réalisation, le dispositif comprend une unité de détection d'un paramètre environnemental configurée pour détecter un paramètre externe au dispositif, l'unité logique de traitement étant configurée pour décider de l'émission du signal d'information sur la base dudit paramètre externe détecté par l'unité de détection d'un paramètre environnemental.

L'unité de détection d'un paramètre environnemental peut utiliser une technologie de type électrique, capacitive, inductive, ou encore tactile ou optique pour déterminer le paramètre externe.

Ainsi, l'émission du signal d'information peut varier, en fréquence et/ou en contenu, en fonction dudit paramètre externe détecté.

Selon un mode de réalisation, le paramètre externe détecté est une position ou un niveau de vibration de la structure déployable,

Selon un mode de réalisation, une transition entre les modes de fonctionnement en veille, de réception ou d'émission peut être commandée lors d'une modification du paramètre externe détecté.

En particulier, la transition peut être déclenchée par un signal de l'unité de détection d'un paramètre environnemental. Alternativement, un signal spécifique de réveil peut être envoyé par l'unité électronique de contrôle pour déclencher cette transition.

Selon un mode de réalisation, l'unité de détection d'un paramètre environnemental est une unité de détection de position qui détermine que la structure déployable est dans une position repliée lorsque le dispositif est à une distance inférieure à un premier seuil de l'unité électronique de contrôle.

Par exemple, le premier seuil est inférieur à 50cm, préférentiellement 30cm.

Selon un mode de réalisation, l'unité logique de traitement est dans le mode de fonctionnement en veille lorsque la structure déployable est en position repliée. Autrement dit, lorsque la structure déployable est en position repliée, le dispositif de stockage d'énergie est chargé par le signal incident provenant de l'unité électronique de contrôle.

Selon un mode de réalisation, l'unité de détection de position détermine que la structure déployable est dans une position déployée lorsque le dispositif est à une distance supérieure à un deuxième seuil de l'unité électronique de contrôle.

Par exemple, le deuxième seuil est supérieur à 50cm, préférentiellement 30cm.

Selon un mode de réalisation, le premier seuil est égal au deuxième seuil.

Ainsi, la structure déployable a deux positions possibles : déployée ou repliée.

Selon un mode de réalisation, l'unité logique de traitement est dans le mode de fonctionnement d'émission lorsque la structure déployable est en position déployée.

Autrement dit, lorsque la structure déployable est en position déployée, le dispositif de stockage d'énergie alimente électriquement l'unité logique de traitement en tant que source d'énergie autonome.

Selon un mode de réalisation, l'unité de détection de position détermine la position de la structure déployable en fonction d'une information reçue par l'unité électronique de contrôle, et/ou d'une information reçue d'un accéléromètre fixé sur la partie mobile, et/ou de la quantité de courant électrique issue de la conversion du signal incident, et/ou d'une mesure d'un niveau de puissance du signal incident.

Le niveau de puissance du signal incident peut être mesuré en analogique, en continu ou à partir d'une échelle de puissance par exemple exprimée dans une échelle logarithmique. Le niveau de puissance du signal est déterminé à partir du signal reçu par l'unité logique de traitement.

Ainsi la détection de position peut être déterminée et/ou confirmée par une combinaison de plusieurs informations. Par exemple, si la mesure du niveau de puissance du signal incident est supérieure à -10dBm, l'unité de détection en déduira que la structure déployable est en position repliée.

Une telle disposition permet également de détecter des mouvements anormaux de la structure déployable et d'envoyer un signal d'information à l'unité électronique de contrôle lorsque des mouvements anormaux de la structure déployable sont détectés.

Selon un mode de réalisation, aucun signal incident n'est émis par l'unité logique de traitement lorsque la quantité de courant électrique issue de la conversion du signal incident est inférieure à un seuil de courant.

Une telle disposition permet une économie d'énergie. En effet, l'unité électronique de contrôle n'envoie pas de signal incident si le courant électrique issue de la conversion dudit signal incident est trop faible.

Selon un mode de réalisation, le dispositif est configuré pour envoyer un signal d'état comprenant au moins une information sur l'état du dispositif à intervalle régulier lorsque la structure déployable est en position déployée.

L'état du dispositif correspond notamment à un état de fonctionnement ou un état de charge du dispositif de stockage d'énergie.

Selon un mode de réalisation, le signal d'état comprend la quantité d'énergie présente dans le dispositif de stockage d'énergie.

Une telle disposition permet à l'unité électronique de contrôle de connaitre le niveau de charge du dispositif, et donc son autonomie ou permet à l'unité électronique de contrôle de ne plus envoyer de signal incident lorsque le signal d'état indique que le dispositif de stockage d'énergie est suffisamment chargé. Une telle disposition permet donc une économie d'énergie.

Selon un mode de réalisation, le signal d'état est envoyé à intervalle régulier.

L'invention concerne également un ensemble comprenant un dispositif selon l'invention destiné à être positionné sur une partie mobile d'une structure déployable et une unité électronique de contrôle solidaire d'une partie fixe de la structure déployable, dans lequel l'unité électronique de contrôle est configurée pour envoyer un ordre de mouvement de changement de position de la structure déployable à un actionneur, l'actionneur étant configuré pour modifier une position de ladite structure déployable.

Selon un mode de réalisation, l'unité électronique de contrôle est configurée pour envoyer l'ordre de mouvement à la réception du signal d'information en provenance du dispositif.

Selon un mode de réalisation, l'unité électronique de contrôle est configurée pour envoyer l'ordre de mouvement lorsque ladite unité électronique de contrôle ne reçoit plus de signal d'état en provenance du dispositif

Selon un mode de réalisation, la structure déployable comprend un élément déployable de toute sorte telle qu'un store banne par exemple.

L'invention concerne également un procédé de fonctionnement d'un dispositif destiné à être positionné sur une partie mobile d'une structure déployable, le dispositif comprenant un dispositif émetteur-récepteur sans fil comprenant une unité logique de traitement et une antenne, dans lequel le dispositif réalise les étapes suivantes :
- élaboration d'un signal d'information par l'unité logique de traitement,
- émission de signal d'information par l'antenne du dispositif émetteur-récepteur sans fil,
- une étape de charge dans laquelle au moins une partie du signal d'information est converti en courant électrique de sorte à recharger un dispositif de stockage d'énergie du dispositif.

### Description sommaire des dessins

L'invention sera encore mieux comprise à l'aide de la description détaillée qui est exposée ci-dessous en regard des dessins annexés dans lesquels :
[Fig. 1] représente une structure déployable sur lequel est disposé un dispositif conformément à la présente invention.
[Fig. 2] représente un schéma électrique du dispositif conformément à la présente invention.
[Fig. 3] représente un signal incident reçu par le dispositif conformément à la présente invention.
[Fig. 4] représente un signal d'information émis par le dispositif conformément à la présente invention.

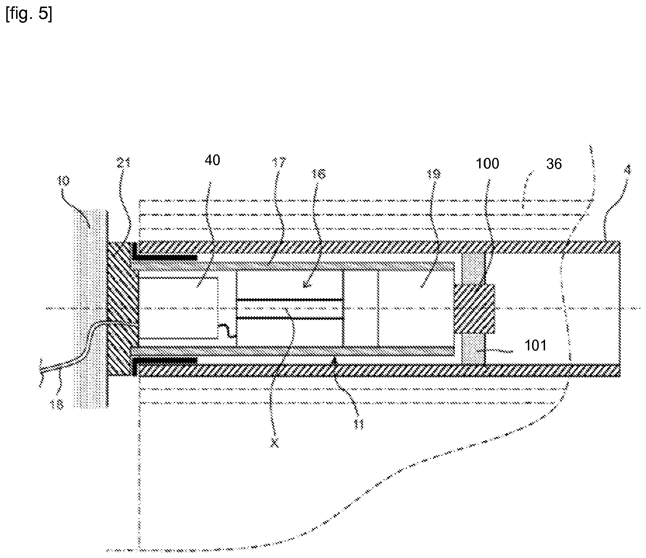

[Fig. 5] représente un schéma d'un dispositif d'entraînement comprenant un actionneur électromécanique en lien de communication avec le dispositif conformément à la présente invention.

### Description détaillée

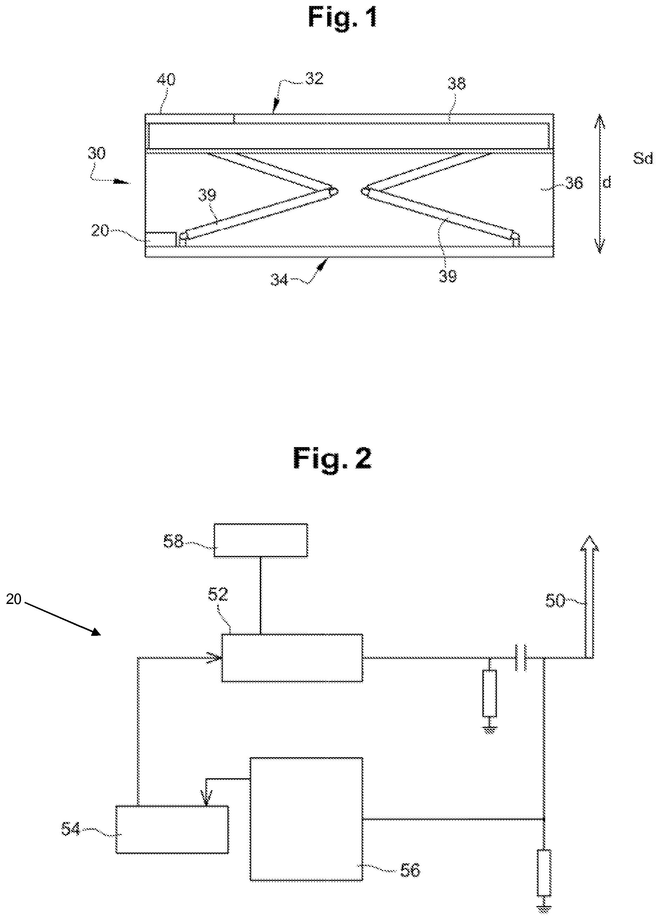

La figure 1 représente, à titre d'exemple d'une structure déployable 30, un store de terrasse motorisé. La structure déployable comprend une partie fixe 32 formant une extrémité proximale de la structure déployable destinée à être fixée sur un support 10 comme un mur de bâtiment, une toile 36 qui est accrochée à une partie mobile 34 sous la forme par exemple d'une barre de charge formant une extrémité distale de la structure déployable, un dispositif d'entrainement 38 comme par exemple un tube d'enroulement 4 motorisé, agencé pour enrouler la toile 36, le dispositif d'entrainement 38 étant solidaire de la partie fixe 32, ainsi que des bras articulés 39 qui sont munis de ressorts, et permettent d'exercer un effort sur la barre de charge 34 à l'encontre de l'action du tube d'enroulement 4 motorisé de manière à maintenir la toile 36 tendue. L'enroulement ou le déroulement de la toile 36 sur le tube d'enroulement 4 motorisé permet de déplacer la partie mobile, les bras articulés et la toile 36 entre au moins une position repliée de la structure déployable et au moins une position déployée. De manière connue, la toile 36 s'accroche par une première extrémité, au tube d'enroulement 4 et par l'autre extrémité à la barre de charge 34.

Le dispositif d'entraînement 38 comprend un actionneur électromécanique 11. Un tel actionneur électromécanique 11 comprend notamment un moteur électrique 16 d'axe de rotation X et permet de mettre en rotation un arbre ou tube d'enroulement 4 de sorte à dérouler ou enrouler la toile 36 de la structure déployable 30. Dans l'état monté de la structure déployable 30, l'actionneur électromécanique 11 est inséré dans le tube d'enroulement 4. L'actionneur électromécanique 11 comprend également une unité électronique de contrôle 40 pour le pilotage du moteur 16. Cette unité électronique de contrôle 40 est apte à mettre en fonctionnement le moteur électrique 16 de l'actionneur électromécanique 11 et, en particulier, à permettre l'alimentation en énergie électrique du moteur électrique 16. Ainsi, l'unité électronique de contrôle 40 commande, notamment, le moteur électrique 16, de sorte à déployer ou replier la toile 36, comme décrit précédemment.

L'unité électronique de contrôle 40 comprend également un module émetteur-récepteur radiofréquences, notamment pour la réception d'ordres de commande en provenance de dispositifs de commande externes.

Le module émetteur-récepteur radiofréquences peut ainsi recevoir des commandes de déroulement ou d'enroulement et/ou des consignes de sécurité, provenant par exemple d'un dispositif de commande externe, tels qu'une télécommande ou un capteur de l'installation domotique. La télécommande est pourvue d'un clavier de commande, qui comprend des moyens de sélection et éventuellement d'affichage, et qui permet à un utilisateur d'intervenir sur l'actionneur électromécanique 11.

Le dispositif d'entraînement 38 motorisé est, de préférence, configuré pour exécuter les commandes de déroulement ou d'enroulement de la toile 36, pouvant être émises notamment par le dispositif de commande externe, lorsque ce dernier est configuré pour dialoguer, autrement dit est appairé ou a échangé un identifiant de communication, avec l'actionneur électromécanique 11, notamment est configuré pour dialoguer avec le module émetteur-récepteur radiofréquences de l'actionneur électromécanique 11.

L'unité électronique de contrôle 40 peut être disposée à l'intérieur d'un carter 17 de l'actionneur électromécanique 11, contenant également le moteur électrique 16.

L'unité électronique de contrôle 40 comprend des moyens matériels et/ou logiciels. A titre d'exemple nullement limitatif, les moyens matériels peuvent comprendre au moins un microcontrôleur.

L'actionneur électromécanique 11 est alimenté en énergie électrique par un réseau d'alimentation électrique du bâtiment, par exemple par le réseau alternatif du secteur ou par un bus à courant continu, ou encore au moyen d'une batterie non représentée, pouvant être rechargée, par exemple, par un panneau photovoltaïque. Ici, l'actionneur électromécanique 11 comprend un câble d'alimentation électrique 18 permettant son alimentation en énergie électrique depuis le réseau d'alimentation électrique du secteur.

L'actionneur électromécanique 11 comprend également un réducteur 19, en particulier un réducteur épicycloïdal et un arbre de sortie 100. Avantageusement, le moteur électrique 16 et le réducteur 19 sont disposés à l'intérieur du carter 17 de l'actionneur électromécanique 11.

L'arbre de sortie 100 de l'actionneur électromécanique 11 est disposé à l'intérieur du tube d'enroulement 4 et, au moins en partie, à l'extérieur du carter 17 de l'actionneur électromécanique 11.

L'arbre de sortie 100 de l'actionneur électromécanique 11 est accouplé par un accessoire de liaison 101 au tube d'enroulement 4, en particulier un accessoire de liaison en forme de roue.

L'actionneur électromécanique 11 comprend également un support de couple 21, monté au niveau d'une extrémité du carter 17 opposée à l'arbre de sortie 100 et obturant l'extrémité du carter 17. Le carter 17 et le support de couple 21 sont fixes en rotation l'un par rapport à l'autre. Bien entendu, une pluralité de positions peuvent être prises par la structure déployable. Il peut être convenu qu'une position repliée correspond à une position dans laquelle une distance d entre l'extrémité proximale 32 et l'extrémité distale 34 de ladite structure déployable 30, ou entre l'unité électronique de contrôle 40 et un dispositif 20 avec lequel il coopère, tel que le capteur ou un autre actionneur par exemple, est inférieure à un premier seuil Sd, et qu'une position déployée correspond à une position dans laquelle la distance d entre l'extrémité proximale 32 et l'extrémité distale 34 de ladite structure déployable 30, ou entre l'unité électronique de contrôle 40 et le dispositif 20, est supérieure à deuxième seuil Sd. Le premier et le deuxième seuil peuvent être distincts ou identiques. Par exemple, le premier seuil est inférieur à 50cm, préférentiellement 30cm. Par exemple, le deuxième seuil est supérieur à 50cm, préférentiellement 30cm.

Le présent exemple utilise un seuil unique Sd.

L'actionneur électromécanique 11 est configuré pour émettre un signal radiofréquence, sur une bande de fréquence pouvant être reçue par le dispositif 20. En particulier, l'unité électronique de contrôle est conçue pour intercaler des séquences d'écoute de messages entrants, ou signaux d'information, et des séquences d'émission de signaux dits signaux d'alimentation, destinés à l'alimentation du dispositif 20. Une partie de signal d'alimentation reçue au niveau du dispositif 20 est dit signal incident 511.

La figure 2 représente un schéma électrique du dispositif 20 coopérant avec l'actionneur. Par la suite dans l'exemple, ce dispositif sera noté capteur 20. En particulier, le capteur comprend un dispositif émetteur/récepteur sans fil comprenant une antenne 50 configurée pour recevoir le signal incident 511 en provenance de l'unité électronique de contrôle 40 et à émettre un signal d'information 522 à ladite unité électronique de contrôle 40, et une unité logique de traitement 52 adaptée pour décider de l'émission d'un signal d'information 522 à l'unité électronique de contrôle 40 par l'antenne 50. Le capteur 20 comprend également et un dispositif de stockage d'énergie 54 pouvant servir de source d'énergie autonome, telle qu'une batterie, un condensateur ou un supercondensateur, configuré pour alimenter l'unité logique de traitement 52.

Le capteur comprend en outre une unité de détection d'un paramètre environnemental 58 configurée pour détecter un paramètre externe de la structure déployable 30, l'unité logique de traitement 52 étant configurée pour décider de l'émission du signal d'information 522 sur la base dudit paramètre externe détecté par l'unité de détection d'un paramètre environnemental 58. L'unité de détection d'un paramètre environnemental 58 peut utiliser une technologie de type électrique, capacitive, inductive, ou encore par exemple tactile, ou optique.

Selon un mode de réalisation, l'unité de détection d'un paramètre environnemental 58 est une unité de détection de position.

L'unité de détection de position détermine la position de la structure déployable 30 en fonction d'une information reçue par l'unité électronique de contrôle 40, et/ou d'une information reçue d'un accéléromètre fixé sur la partie mobile 34, et/ou de la quantité de courant électrique issue d'une conversion du signal incident 511, et/ou d'une mesure d'un niveau de puissance du signal incident 511. Ainsi la détection de position peut être déterminée et/ou confirmée par une combinaison de plusieurs informations. Par exemple, si la mesure du niveau de puissance du signal incident 511 est supérieure à -10dBm, l'unité de détection de position 58 en déduira que la structure déployable 30 est en position repliée.

Une telle disposition permet également de détecter des mouvements anormaux de la structure déployable 30, par exemple une vibration critique, et d'envoyer un signal d'information 522 à l'unité électronique de contrôle 40 lorsque des mouvements anormaux de la structure déployable 30 sont détectés.

Le capteur 20 comprend également un convertisseur 56 configuré pour convertir le signal incident 511 en courant électrique et pour alimenter le dispositif de stockage d'énergie 54 servant de source d'énergie autonome pour le capteur 20, à l'aide dudit courant électrique. En effet, le convertisseur 56 reçoit le signal incident 511 et le converti en courant électrique continu, permettant ainsi de recharger le dispositif de stockage d'énergie 54. Une telle disposition permet de recharger plus facilement ledit dispositif de stockage d'énergie 54 et ainsi d'en réduire la taille du capteur 20.

Le capteur 20 est configuré de sorte que l'antenne 50 est en permanence électriquement reliée ou connectée au convertisseur 56. Le capteur 20 ne comprend donc aucun dispositif électrique, par exemple un interrupteur, ou une diode, permettant de couper une liaison entre l'antenne 50 et le convertisseur 56.

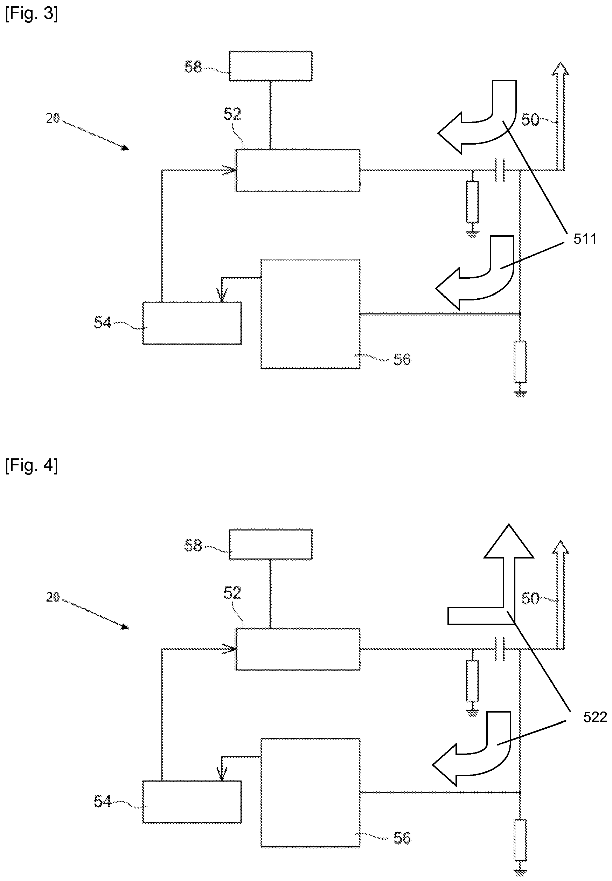

Ainsi, le signal incident 511, qui peut être transmis selon un protocole radio propriétaire ou standard, tel que le protocole Bluetooth et plus spécifiquement « Bluetooth Advertising », est donc toujours dirigé vers le convertisseur 56 comme cela est visible en figure 3, et lors de l'émission du signal d'information 522, une partie de ce dernier est également dirigée vers le convertisseur 56 comme cela est visible en figure 4. Tout signal transitant par l'antenne 50 est également reçu par le convertisseur 56. Le capteur 20 ne comprend aucun mode de fonctionnement dans lequel le convertisseur 56 est déconnecté de l'antenne 50.

Le capteur selon l'invention est donc configuré pour constituer une réserve d'énergie au moyen principalement du signal incident 511, afin de pouvoir réutiliser cette réserve notamment lors de l'émission du signal d'information 522. Selon un mode de réalisation, le convertisseur 56 est configuré pour convertir un signal radiofréquence en courant. Le capteur selon l'invention est configuré pour constituer une réserve d'énergie exclusivement au travers du convertisseur 56. Le capteur selon l'invention présente donc un volume et un prix plus faible que celui de l'état de l'art en ce que certains composants, c'est-à-dire des diodes et des résistances variables, sont retirés. En outre, le capteur 20 présente une consommation d'énergie plus faible que celui-de l'état de l'art puisqu'il présente moins de composants à alimenter électriquement.

Selon un mode de réalisation, le convertisseur 56 est également configuré pour générer un signal binaire à destination de l'unité logique de traitement 52. Le signal binaire généré dépend d'un état de réception du signal incident 511. Selon un mode de réalisation, lorsque qu'un signal incident 511 est reçu par l'antenne 50 et que le convertisseur 56 convertit ledit signal incident 511 en courant électrique, le convertisseur 56 génère un signal binaire à destination de l'unité logique de traitement 52 égal à un. A l'inverse, lorsque le convertisseur 56 ne convertit aucun signal incident 511, ledit convertisseur génère un signal binaire égal à zéro. Selon un mode de réalisation, le signal binaire généré à destination de l'unité logique de traitement 52 est lu par ladite unité logique de traitement 52 suivant un intervalle déterminé tel que toutes les 20ms par exemple.

Selon un mode de réalisation, l'unité logique de traitement 52 est en permanence électriquement connectée à l'antenne 50.

Le capteur 20 ne comprend donc aucun dispositif électrique, par exemple un interrupteur, ou une diode, permettant de couper une liaison entre l'antenne 50 et l'unité logique de traitement 52. Ainsi, le signal incident 511 est donc toujours dirigé vers l'unité logique de traitement 52 comme cela est visible sur la figure 3. Tout signal incident transitant par l'antenne 50 est également reçu par l'unité logique de traitement 52.

Lors de l'émission du signal d'information 522, une partie de ce signal est également dirigée vers le convertisseur 56 comme cela est visible sur la figure 4.

Le capteur 20 selon l'invention présente donc un volume et un prix plus faible que celui de l'état de l'art en ce que certains composants, c'est-à-dire des diodes et des résistances variables, sont retirés. En outre, le capteur 20 présente une consommation d'énergie plus faible que celui-de l'état de l'art puisqu'il présente moins de composants à alimenter électriquement.

Alternativement, l'unité logique de traitement 52 est connectée à l'antenne 50 par le biais d'un interrupteur normalement fermé. La seule consommation nécessaire a lieu pour le pilotage de l'interrupteur en ouverture. Ainsi lorsque l'interrupteur est ouvert, le signal incident 511 est dirigé uniquement vers le convertisseur 56. L'unité logique de traitement peut donc fonctionner selon le mode de fonctionnement de réception ou d'émission lorsque l'interrupteur est en position fermée.

Dans les différents modes de réalisation décrits, l'antenne 50 peut prendre la forme d'une antenne imprimée comprenant une première extrémité d'émission-réception principale et une deuxième extrémité séparée en deux brins d'antenne, un premier brin étant relié au convertisseur 56, un deuxième brin étant relié à l'unité logique de traitement 52. Un condensateur et une inductance peuvent être intercalés sur le deuxième brin entre la première extrémité d'antenne et l'unité logique de traitement afin d'adapter l'impédance du circuit.

Selon un mode de réalisation, l'unité logique de traitement 52 comprend un mode de fonctionnement en veille dans lequel le signal incident 511 est reçu mais n'est pas interprété ou décrypté par l'unité logique de traitement 52. Le mode de fonctionnement en veille correspond à une mise en veille de l'unité logique de traitement 52 dans lequel le signal incident 511 est reçu mais n'est pas électriquement traité. Ainsi, lorsque l'unité logique de traitement 52 est dans le mode de fonctionnement en veille, sa consommation électrique est faible, voire nulle, ce qui limite la décharge du dispositif de stockage d'énergie 54. L'unité logique de traitement 52 dans ce mode de fonctionnement en veille agit par ailleurs comme un interrupteur qui déconnecterait électriquement le brin d'antenne qui lui est relié. Ainsi, dans ce mode de fonctionnement en veille, le signal incident 511 est donc exclusivement ou quasiment exclusivement dirigé vers le convertisseur 56 pour y être converti en énergie.

En particulier, dans le mode de fonctionnement en veille, l'unité logique de traitement 52 ne décrypte le signal incident 511 qu'à partir du moment où un niveau, par exemple un niveau RSSI (de l'anglais Received Signal Strength Indication) du signal dépasse une valeur prédéfinie ou se situe dans une plage de valeurs prédéterminée. En limitant la consommation liée au traitement du signal, on maximise la charge du dispositif de stockage d'énergie 54.

Le décryptage du signal dont le niveau est en-dessous de la valeur prédéfinie ou se situe hors de la plage de valeurs prédéterminées, permet de traiter certains messages incidents, notamment les messages contenant des données communiquées par l'actionneur électromécanique au capteur 20 ou par un autre dispositif externe communicant, tel qu'une box domotique.

Avantageusement, aucun signal d'information n'est transmis dans le mode de fonctionnement en veille de l'unité logique de traitement.

Le convertisseur 56 et l'unité logique de traitement 52 comprennent des moyens matériels et/ou logiciels pour gérer l'impédance des brins d'antenne qui leur sont associés. Cette impédance peut être choisie de sorte à privilégier la recharge du dispositif de stockage d'énergie au détriment de la performance d'émission en radio. Les deux brins d'antenne ont les mêmes propriétés.

La problématique qui se pose est notamment d'arriver à gérer une charge assez efficace sans que les deux branches d'antenne ne se perturbent trop. Pour cela, on agit notamment sur une géométrie de l'antenne et des deux brins reliant l'antenne à l'unité logique de traitement et au convertisseur. Il s'agit de rechercher un compromis entre une longueur des brins, un facteur de forme du dispositif et son encombrement.

Selon un mode de réalisation, l'unité logique de traitement 52 comprend un mode de fonctionnement de réception dans lequel un signal incident 511 est reçu et décrypté par l'unité logique de traitement 52.

Dans le mode de fonctionnement de réception, l'unité logique de traitement 52 reçoit des informations par le signal incident 511 de l'unité électronique de contrôle 40. Les informations peuvent, par exemple, être la confirmation que l'unité électronique de contrôle 40 a reçu un ordre de mouvement de la partie mobile 34 par rapport à la partie fixe 32 de la structure déployable 30 ou un ordre de réglage de paramètre interne au capteur 20.

Selon un mode de réalisation, l'unité logique de traitement 52 comprend un mode de fonctionnement d'émission dans lequel l'unité logique de traitement 52 émet le signal d'information 522 à destination de l'unité électronique de contrôle 40.

Les modes de fonctionnement de l'unité logique de traitement sont adaptés en fonction de la position de la structure déployable 30. Ainsi, le mode de fonctionnement de réception peut être restreint aux positions dans lesquelles le capteur 20 est à proximité de l'unité électronique de contrôle 40 de l'actionneur électromécanique 60.

Selon un mode de réalisation, une transition entre les modes de fonctionnement en veille, de réception ou d'émission peut être commandée lors d'une modification de la position de la structure déployable 30. En particulier, la transition peut être déclenchée par un signal de l'unité de détection de position 58. Alternativement, un signal spécifique de réveil peut être envoyé par l'unité électronique de contrôle 40 pour déclencher cette transition.

Le signal d'information 522 émis par le biais de l'antenne 50 peut varier, en fréquence et/ou en contenu, en fonction de la position de la structure déployable 30. Le signal d'information 522 peut notamment être un signal de sécurité comprenant une alerte par exemple, ou un signal d'état. L'état du capteur correspond notamment à un état de fonctionnement ou un état de charge du dispositif de stockage d'énergie.

Selon un mode de réalisation, le capteur 20 est configuré pour envoyer un signal d'état comprenant une information sur la quantité d'énergie restante dans le dispositif de stockage d'énergie 54 du capteur 20 à intervalle régulier, par exemple lorsque la structure déployable 30 est en position déployée. Une telle disposition permet à l'unité électronique de contrôle 40 de connaitre l'état du capteur 20. Une telle disposition permet également à l'unité électronique de contrôle 40 d'envoyer un ordre de mouvement afin modifier la position de la structure déployable 30. Par exemple, l'ordre peut être de mettre en position repliée la structure déployable 30 afin de recharger le dispositif de stockage d'énergie 54 du capteur 20 lorsque celui-ci ne comprend qu'une petite quantité d'énergie, et notamment si l'unité électronique de contrôle 40 ne reçoit plus de signal d'état.

Selon un mode de réalisation, le capteur 20 est configuré pour envoyer un signal d'état du dispositif de stockage d'énergie autonome 54 lorsque la structure déployable 30 est en position repliée. Une telle disposition permet à l'unité électronique de contrôle 40 de ne plus envoyer de signal incident 511 lorsque le signal d'état indique que le dispositif de stockage d'énergie 54 est suffisamment chargé. Une telle disposition permet donc une économie d'énergie.

Selon un mode de réalisation, le capteur est configuré pour envoyer un signal de niveau de conversion lorsque la quantité de courant électrique issue de la conversion du signal incident 511 est inférieure à un seuil de courant. Ainsi, en réaction, aucun signal incident 511 n'est émis par l'unité logique de traitement 40 lorsque la quantité de courant électrique issue de la conversion du signal incident 511 est inférieure à un seuil de courant. Une telle disposition permet une économie d'énergie globale au niveau de l'installation, notamment au niveau de l'unité électronique de contrôle 40. En effet, l'unité électronique de contrôle 40 n'envoie pas de signal incident 511 si le courant électrique issue de la conversion dudit signal incident est trop faible.

Selon un mode de réalisation, le signal d'état et/ou le signal de niveau de conversion est envoyé à intervalle régulier.

Selon un mode de réalisation, le signal d'état comprend la quantité d'énergie présente dans le dispositif de stockage d'énergie 54.

A la réception d'un signal incident 511, l'unité électronique de contrôle 40 est configurée pour piloter le moteur électrique de l' actionneur 38, comprenant par exemple le tube enrouleur motorisé, afin de faire passer la structure déployable 30 d'une position déployée à une position repliée. Une telle configuration permet par exemple de replier la structure mobile 30 et ainsi réduire sa prise au vent. Une telle disposition permet de limiter les risques de dégradation de ladite structure mobile.

Selon une possibilité, le signal d'information 522 n'est envoyé à l'unité électronique de contrôle 40 par le biais de l'antenne 50 que lorsque la structure déployable 30 est en position déployée. En effet, lorsque la structure déployable 30 est en position repliée, il n'est pas nécessaire d'obtenir des informations notamment de vibration puisque la structure mobile a déjà réduit sa prise au vent.

Selon une possibilité, l'unité électronique de contrôle 40 comprend des moyens de détermination de position de la structure déployable 30. Ces moyens de détermination peuvent fournir une information de position angulaire de l'actionneur. Cette information de position peut être confirmée par le capteur 20. L'actionneur connaît en effet sa position angulaire, par exemple par un apprentissage préalable des fins de course et une analyse des mouvements angulaires dans son fonctionnement normal.

L'invention porte également sur un procédé de fonctionnement du capteur 20 destiné à être positionné sur une partie mobile 34 de la structure déployable 30, le capteur comprenant le dispositif émetteur-récepteur sans fil comprenant l'unité logique de traitement 52 et l'antenne 50, dans lequel le capteur 20 réalise les étapes suivantes :
- élaboration d'un signal d'information 522 par l'unité logique de traitement 52,
- émission de signal d'information 522 par l'antenne 20 du dispositif émetteur-récepteur sans fil,
- une étape de charge dans laquelle au moins une partie du signal d'information 522 est converti en courant électrique de sorte à recharger un dispositif de stockage d'énergie 54 du capteur 20. L'invention pourrait aussi s'appliquer à une protection solaire intérieure tel qu'un écran vertical, tel qu'un store rouleau, à toile ou un store vénitien par exemple. Dans cet exemple, non représenté, un capteur 20 peut être placé sur la partie inférieure du store et en particulier sur la partie mobile et l'actionneur électromécanique est monté sur une partie fixe. L'actionneur électromécanique est destiné à être placé dans un rail profilé en U et destiné à entraîner en rotation un arbre d'enroulement sur lequel s'enroulent des cordons associés à l'écran. Le capteur peut être un capteur comprenant une unité de détection d'un paramètre environnemental apte à détecter un choc correspondant à un ordre de montée ou de descente du store, ou une unité de détection comprenant des touches tactiles constituant un clavier de commande permettant à l'utilisateur de commander le mouvement du store. De la même manière que dans les exemples précédents l'unité électronique de contrôle est associée à un actionneur permettant de mettre en mouvement le store. L'unité électronique de contrôle pourrait dans ce cas également transmettre un signal incident par le biais de l'antenne 50, au capteur présent dans la partie inférieure du store lorsque ce dernier est en position repliée.

Alternativement, le dispositif 20 est un actionneur électromécanique, tel qu'un actionneur motorisant le déroulement d'un lambrequin de store de terrasse. D'autres types de dispositifs pourraient être envisagés sans sortir du cadre de l'invention, dès lors qu'ils se retrouvent au moins dans certaines positions à proximité de l'unité électronique de contrôle apte à fournir un signal incident conformément à la présente invention.

## Revendications

1. Dispositif (20) destiné à être positionné sur une partie mobile (34) d'une structure déployable (30), et à émettre un signal d'information (522) à destination d'au moins une unité électronique de contrôle (40) solidaire d'une partie fixe (32) de la structure déployable (30), tel que le dispositif (20) comprend :
- au moins un dispositif émetteur/récepteur sans fil configuré pour recevoir un signal incident (511) en provenance de l'au moins une unité électronique de contrôle (40) et pour émettre le signal d'information (522) à destination de l'au moins une unité électronique de contrôle, le dispositif émetteur/récepteur sans fil comprenant :
- une antenne (50);
- au moins une unité logique de traitement (52) ;
- au moins un dispositif de stockage d'énergie (54) ;
- au moins un convertisseur (56) configuré pour convertir le signal incident (511) en courant électrique et pour recharger le dispositif de stockage d'énergie (54) à l'aide dudit courant électrique ;
l'au moins une unité logique de traitement (52) étant adaptée pour décider de l'émission du signal d'information (522) à l'au moins une unité électronique de contrôle (40) par l'antenne (50), l'au moins un dispositif de stockage d'énergie (54) étant configuré pour alimenter l'au moins une unité logique de traitement (52) ;
**caractérisé en ce que** l'antenne (50) est en permanence électriquement connectée à l'au moins un convertisseur (56).

2. Dispositif (20) selon la revendication 1, dans lequel l'unité logique de traitement (52) est en permanence électriquement connectée à l'antenne (50).

3. Dispositif (20) selon la revendication 1, dans lequel l'unité logique de traitement (52) est électriquement connectée à l'antenne (50) au moyen d'un organe de commande permettant d'ouvrir ou de fermer la connexion électrique.

4. Dispositif (20) selon la revendication 3, dans lequel l'organe de commande est un interrupteur normalement en position fermée.

5. Dispositif (20) selon l'une quelconque des revendications précédentes, dans lequel le signal d'information (522) est au moins en partie converti en courant électrique par le convertisseur (56).

6. Dispositif (20) selon l'une quelconque des revendications précédentes, comprenant une unité de détection d'un paramètre environnemental (58) configurée pour détecter un paramètre externe au dispositif (20), l'unité logique de traitement (52) étant configurée pour décider de l'émission du signal d'information (522) sur la base dudit paramètre externe détecté par l'unité de détection d'un paramètre environnemental (58).

7. Dispositif (20) selon la revendication 6, dans lequel l'unité de détection d'un paramètre environnemental (58) est une unité de détection de position qui détermine que la structure déployable (30) est dans une position repliée lorsque le dispositif (20) est à une distance inférieure à un premier seuil de l'unité électronique de contrôle (40).

8. Dispositif (20) selon la revendication 7, dans lequel l'unité de détection de position détermine que la structure déployable (30) est dans une position déployée lorsque le dispositif (20) est à une distance supérieure à un deuxième seuil de l'unité électronique de contrôle (40).

9. Dispositif (20) selon l'une quelconque des revendications 7 à 8, dans lequel l'unité de détection de position détermine la position de la structure déployable (30) en fonction d'une information reçue par l'unité électronique de contrôle (40), et/ou d'une information reçue d'un accéléromètre fixé sur la partie mobile, et/ou de la quantité de courant électrique issue de la conversion du signal incident, et/ou d'une mesure d'un niveau de puissance du signal incident.

10. Ensemble comprenant un dispositif (20) destiné à être positionné sur une partie mobile (34) d'une structure déployable (30) selon l'une des revendications 1 à 9 et une unité électronique de contrôle (40) solidaire d'une partie fixe (32) de la structure déployable (30), dans lequel l'unité électronique de contrôle (40) est configurée pour envoyer un ordre de mouvement de changement de position de la structure déployable (30) à un actionneur (38), l'actionneur (38) étant configuré pour modifier une position de ladite structure déployable (30).

11. Procédé de fonctionnement d'un dispositif (20) destiné à être positionné sur une partie mobile (34) d'une structure déployable (30), le dispositif comprenant un dispositif émetteur-récepteur sans fil comprenant une unité logique de traitement (52) et une antenne (50), dans lequel le dispositif (20) réalise les étapes suivantes :
- élaboration d'un signal d'information (522) par l'unité logique de traitement (52),
- émission de signal d'information par l'antenne (50) du dispositif émetteur-récepteur sans fil,
- une étape de charge dans laquelle au moins une partie du signal d'information (522) est converti en courant électrique de sorte à recharger un dispositif de stockage d'énergie (54) du dispositif (20).

## Patentansprüche

1. Vorrichtung (20), die dazu bestimmt ist, an einem beweglichen Teil (34) einer ausfahrbaren Struktur (30) positioniert zu werden und ein Informationssignal (522) an mindestens eine elektronische Steuereinheit (40) zu senden, die fest mit einem festen Teil (32) der ausfahrbaren Struktur (30) verbunden ist, wobei die Vorrichtung (20) Folgendes umfasst:
- mindestens eine drahtlose Sende-/Empfangsvorrichtung, die so konfiguriert ist, dass sie ein Störsignal (511) von der mindestens einen elektronischen Steuereinheit (40) empfängt und das Informationssignal (522) an die mindestens eine elektronische Steuereinheit sendet, wobei die drahtlose Sende-/Empfangsvorrichtung Folgendes umfasst:
- eine Antenne (50);
- mindestens eine logische Verarbeitungseinheit (52);
- mindestens eine Energiespeichervorrichtung (54);
- mindestens einen Wandler (56), der so konfiguriert ist, dass er das Störsignal (511) in elektrischen Strom umwandelt und die Energiespeichervorrichtung (54) mithilfe des elektrischen Stroms wieder auflädt;
wobei die mindestens eine logische Verarbeitungseinheit (52) dazu geeignet ist, über das Senden des Informationssignals (522) an die mindestens eine elektronische Steuereinheit (40) durch die Antenne (50) zu entscheiden, wobei die mindestens eine Energiespeichervorrichtung (54) so konfiguriert ist, dass sie die mindestens eine logische Verarbeitungseinheit (52) mit Energie versorgt;
**dadurch gekennzeichnet, dass** die Antenne (50) permanent elektrisch mit dem mindestens einen Wandler (56) verbunden ist.

2. Vorrichtung (20) nach Anspruch 1, wobei die logische Verarbeitungseinheit (52) permanent elektrisch mit der Antenne (50) verbunden ist.

3. Vorrichtung (20) nach Anspruch 1, wobei die logische Verarbeitungseinheit (52) mittels eines Steuerelements, das das Öffnen oder Schließen der elektrischen Verbindung ermöglicht, elektrisch mit der Antenne (50) verbunden ist.

4. Vorrichtung (20) nach Anspruch 3, wobei das Steuerelement ein Schalter in normal geschlossener Position ist.

5. Vorrichtung (20) nach einem der vorhergehenden Ansprüche, wobei das Informationssignal (522) durch den Wandler (56) mindestens teilweise in elektrischen Strom umgewandelt wird.

6. Vorrichtung (20) nach einem der vorhergehenden Ansprüche, umfassend eine Umgebungsparameter-Erkennungseinheit (58), die so konfiguriert ist, dass sie einen Parameter außerhalb der Vorrichtung (20) erkennt, wobei die logische Verarbeitungseinheit (52) so konfiguriert ist, dass sie auf der Grundlage des von der Umgebungsparameter-Erkennungseinheit (58) erkannten externen Parameters über die Ausgabe des Informationssignals (522) entscheidet.

7. Vorrichtung (20) nach Anspruch 6, wobei die Umgebungsparameter-Erkennungseinheit (58) eine Positionserkennungseinheit ist, die bestimmt, dass sich die ausfahrbare Struktur (30) in einer eingeklappten Position befindet, wenn sich die Vorrichtung (20) in einem Abstand, der kleiner als ein erster Schwellenwert ist, von der elektronischen Steuereinheit (40) befindet.

8. Vorrichtung (20) nach Anspruch 7, wobei die Positionserkennungseinheit bestimmt, dass sich die ausfahrbare Struktur (30) in einer ausgefahrenen Position befindet, wenn sich die Vorrichtung (20) in einem Abstand, der größer als ein zweiter Schwellenwert ist, von der elektronischen Steuereinheit (40) befindet.

9. Vorrichtung (20) nach einem der Ansprüche 7 bis 8, wobei die Positionserkennungseinheit die Position der ausfahrbaren Struktur (30) in Abhängigkeit von einer von der elektronischen Steuereinheit (40) empfangenen Information und/oder einer von einem am beweglichen Teil befestigten Beschleunigungsmesser empfangenen Information und/oder der Menge des elektrischen Stroms aus der Umwandlung des Störsignals und/oder einer Messung eines Leistungspegels des Störsignals bestimmt.

10. Baugruppe, die eine Vorrichtung (20) umfasst, die dazu bestimmt ist, an einem beweglichen Teil (34) einer ausfahrbaren Struktur (30) nach einem der Ansprüche 1 bis 9 positioniert zu werden, und eine elektronische Steuereinheit (40), die fest mit einem festen Teil (32) der ausfahrbaren Struktur (30) verbunden ist, wobei die elektronische Steuereinheit (40) so konfiguriert ist, dass sie einen Bewegungsbefehl zum Ändern der Position der ausfahrbaren Struktur (30) an einen Aktuator (38) sendet, wobei der Aktuator (38) so konfiguriert ist, dass er eine Position der ausfahrbaren Struktur (30) ändert.

11. Verfahren zum Betreiben einer Vorrichtung (20), die dazu bestimmt ist, an einem beweglichen Teil (34) einer ausfahrbaren Struktur (30) positioniert zu werden, wobei die Vorrichtung eine drahtlose Sende-Empfangsvorrichtung umfasst, die eine logische Verarbeitungseinheit (52) und eine Antenne (50) umfasst, wobei die Vorrichtung (20) die folgenden Schritte durchführt:
- Erstellen eines Informationssignals (522) durch die logische Verarbeitungseinheit (52),
- Senden eines Informationssignals durch die Antenne (50) der drahtlosen Sende- und Empfangsvorrichtung,
- einen Ladeschritt, bei dem mindestens ein Teil des Informationssignals (522) in elektrischen Strom umgewandelt wird, um eine Energiespeichervorrichtung (54) der Vorrichtung (20) wieder aufzuladen.

## Claims

1. A device (20) intended to be positioned on a movable part (34) of a deployable structure (30), and to transmit an information signal (522) to at least one electronic control unit (40) secured to a fixed part (32) of the deployable structure (30), such that the device (20) comprises:
- at least one wireless transceiver device configured to receive an incident signal (511) from the at least one electronic control unit (40) and to transmit the information signal (522) to the at least one electronic control unit, the wireless transceiver device comprising:
- an antenna (50);
- at least one logic processing unit (52);
- at least one energy storage device (54);
- at least one converter (56) configured to convert the incident signal (511) into an electrical current and to recharge the energy storage device (54) using said electrical current;
the at least one logic processing unit (52) being adapted to decide whether to transmit the information signal (522) to the at least one electronic control unit (40) via the antenna (50), the at least one energy storage device (54) being configured to power the at least one logic processing unit (52);
**characterized in that** the antenna (50) is permanently electrically connected to the at least one converter (56).

2. The device (20) according to claim 1, wherein the logic processing unit (52) is permanently electrically connected to the antenna (50).

3. The device (20) according to claim 1, wherein the logic processing unit (52) is electrically connected to the antenna (50) by means of a control member allowing opening or closing the electrical connection.

4. The device (20) according to claim 3, wherein the control member is a normally closed switch.

5. The device (20) according to any one of the preceding claims, wherein the information signal (522) is at least partially converted into an electrical current by the converter (56).

6. The device (20) according to any one of the preceding claims, comprising an environmental parameter detection unit (58) configured to detect a parameter external to the device (20), the logic processing unit (52) being configured to decide whether to transmit the information signal (522) based on said external parameter detected by the environmental parameter detection unit (58).

7. The device (20) according to claim 6, wherein the environmental parameter detection unit (58) is a position detection unit that determines that the deployable structure (30) is in a folded position when the device (20) is at a distance less than a first threshold from the electronic control unit (40).

8. The device (20) according to claim 7, wherein the position detection unit determines that the deployable structure (30) is in a deployed position when the device (20) is at a distance greater than a second threshold from the electronic control unit (40).

9. The device (20) according to any one of claims 7 to 8, wherein the position detection unit determines the position of the deployable structure (30) based on information received by the electronic control unit (40), and/or information received from an accelerometer fastened to the movable part, and/or the amount of electrical current resulting from the conversion of the incident signal, and/or a measurement of a power level of the incident signal.

10. An assembly comprising a device (20) intended to be positioned on a movable part (34) of a deployable structure (30) according to any of claims 1 to 9 and an electronic control unit (40) secured to a fixed part (32) of the deployable structure (30), wherein the electronic control unit (40) is configured to send a movement command to change the position of the deployable structure (30) to an actuator (38), the actuator (38) being configured to change a position of said deployable structure (30).

11. A method for operating a device (20) intended to be positioned on a movable part (34) of a deployable structure (30), the device comprising a wireless transceiver device comprising a logic processing unit (52) and an antenna (50), wherein the device (20) carries out the following steps:
- generating an information signal (522) by the logic processing unit (52),
- transmitting the information signal via the antenna (50) of the wireless transceiver device,
- a charging step in which at least one portion of the information signal (522) is converted into an electrical current so as to recharge an energy storage device (54) of the device (20).
